# EUROPÄISCHE PATENTSCHRIFT

(11) **EP 3 747 278 B1**
(45) Veröffentlichungstag und Bekanntmachung des Hinweises auf die Patenterteilung: **03.07.2024**
(21) Anmeldenummer: 20178783.5
(22) Anmeldetag: 08.06.2020
(51) Int. Cl.: A23G 3/12, A23G 3/50, A23G 3/56, A23P 10/10, A47G 21/00, A23G 3/02, C13B 50/00

(54) **ZUCKER-STAB-EINHEIT SOWIE VORRICHTUNG ZUR HERSTELLUNG DERARTIGER ZUCKER-STAB-EINHEITEN**
SUGAR ROD UNIT AND DEVICE FOR THE PRODUCTION OF THIS TYPE OF SUGAR ROD UNITS
UNITÉ DE BÂTON DE SUCRE AINSI QUE DISPOSITIF DE FABRICATION DES TELLES UNITÉS DE BÂTON DE SUCRE

(30) Priorität: 06.06.2019 DE 202019103195 U
(43) Veröffentlichungstag der Anmeldung: 09.12.2020
(73) Patentinhaber: BerLin Handelsgesellschaft mbH, 28309 Bremen (DE)
(72) Erfinder: LINNENBAUM, Bernhard, 28879 Grasberg (DE)
(74) Vertreter: Wasiljeff, Johannes M.B.

(56) Entgegenhaltungen:
- EP-A1- 3 075 868
- WO-A1-2007/063265
- WO-A1-2010/049903
- CN-A- 105 146 013
- CN-U- 202 714 153
- DE-U1-202008 009 395
- FR-A1- 2 624 713
- FR-A1- 2 791 543
- GB-A- 2 341 305
- NL-A- 8 702 732
- US-A- 3 312 555
- US-A- 3 869 555
- US-A1- 2002 155 196
- US-A1- 2018 014 676

## Beschreibung

Die Erfindung betrifft eine Zucker-Stab-Einheit gemäß dem Oberbegriff von Anspruch 1 sowie Vorrichtung zur Herstellung derartiger Zucker-Stab-Einheiten nach Anspruch 11.

Die Erfindung betrifft im Einzelnen eine Zucker-Stab-Einheit, die einen Stab und einen Zuckerkörper aufweist, der aus verklebtem Kristallzucker gebildet ist. Hierzu wird zunächst Kristallzucker befeuchtet und in einer Matrize zu der gewünschten Form geformt, insbesondere gepresst. Anschließend erfolgt eine Trocknung in der Form und der Zuckerkörper kann anschließend aus der Form entnommen werden. Auf diese Weise wird herkömmlicherweise bspw. Würfelzucker hergestellt.

Erfindungsgemäß ist vorgesehen, dass der Zuckerkörper um einen Stab herum gebildet wird. Derart um einen Stab herum gebildete Formkörper aus Zucker dienen dazu, eine Feuerzangenbowle in einem Trinkgefäß, bspw. einer Tasse oder einem Becher, zuzubereiten. Zu diesem Zweck wird die Zucker-Stab-Einheit auf dem Rand des Trinkgefäßes aufgelegt, nachdem zunächst ein glühweinartiges Getränk in das Trinkgefäß gegeben wurde. Anschließend wird der Zuckerkörper mit einem hochprozentigen alkoholischen Getränk, insbesondere Rum, übergossen und angezündet. Der Zuckerkörper schmilzt aufgrund der bei der Verbrennung des Alkohols entstehenden Hitze und tropft in das Getränk hinein. Auf diese Weise entsteht ein schmackhaftes Getränk nach Art einer Feuerzangenbowle.

Das Grundprinzip der Zubereitung einer Feuerzangenbowle direkt im Trinkgefäß ist aus EP 1 829 466 B1 bekannt.

Basierend auf diese Art der Zubereitung können erfindungsgemäß aber auch andere Arten von Getränken zubereitet werden, wie bspw. Absinth in Eiswasser, wozu Absinth über den Zuckerkörper der Zucker-Stab-Einheit gegeben wird, um den Zuckerkörper mit Absinth zu tränken, anschließend der mit Absinth getränkte Zuckerkörper angezündet wird und schließlich Eiswasser hinzugegeben wird. Alternativ kann das Eiswasser bereits zu Beginn der Zubereitung in das Trinkgefäß gegeben worden sein.

Ferner können basierend auf diese Art der Zubereitung erfindungsgemäß Kaffeespezialitäten zubereitet werden, wie bspw. ein so genannter Pharisäer, ein Rüdesheimer Kaffee oder Irish Coffee. Zu diesem Zweck wird die Zucker-Stab-Einheit wiederum auf dem Rand des Trinkgefäßes aufgelegt, nachdem zunächst Kaffee oder ein Kaffeehaltiges Getränk in das Trinkgefäß gegeben wurde. Anschließend wird der Zuckerkörper der Zucker-Stab-Einheit mit Rum (zur Zubereitung eines Pharisäers), Weinbrand (zur Zubereitung eines Rüdesheimer Kaffees) oder USG (zur Zubereitung von Irish Coffee) übergossen und angezündet. Der Zuckerkörper schmilzt aufgrund der bei der Verbrennung des Alkohols entstehenden Hitze und tropft in das Getränk hinein.

Alternativ kann erfindungsgemäß diese Art der Zubereitung auch für die Zubereitung von Teespezialitäten verwendet werden. Dabei erfolgt die Zubereitung in analoger Weise wie die Zubereitung der vorgenannten Kaffeespezialitäten, wobei jedoch Kaffee durch Tee ersetzt wird.

Um einen Stab herum angeordnete Zuckerkörper sind bspw. aus FR 2 791 543 A1, US 33 12 555 A und DE 20 2017 002 283 U1 bekannt.

FR 27 915 43 A1 offenbart ein Halbeinweg-Hygieneartikel zum Süßen von Heißgetränken wie Kaffee,Tee, Schokolade und Kräutertees. Sie besteht aus einem starren, länglichen Einwegteil (1), das an einem Ende als Griff (2) dient und an seinem anderen Ende einen süßen Teil (3) hält, der zum Süßen bestimmt ist, wenn der Benutzer die Schutzfolie (4) abzieht, und den süssen Teil (3) in ein heißes Getränk eintaucht.

US 33 125 55 A offenbart ein geformten Zuckerblock mit Griff zum Umrühren eines Getränks in einem Behälter, bestehend aus selbsttragendem Block aus trockenen Rohrzuckerkristallen und einem Stock mit einem zylindrischen Teil, der im wesentlichen vollständig durch die gesamte Länge des Blocks hindurchgeht, und mit einem Teil, der aus dem Block herausragt, um als Griff zum Umrühren des Blocks in einem Getränk zu dienen.US 33 125 55 A offenbart auch eine Methode zur Herstellung des Zuckerblocks mit Griff.

Die aus DE 20 2017 002 283 U1 bekannte Zucker-Stab-Einheit hat den Nachteil, dass der Stab nicht zuverlässig genug mit dem Zuckerkörper verbunden ist und sich daher entweder bereits aufgrund transportbedingter Vibrationen und Erschütterungen und/oder aufgrund der Hitzeeinwirkung durch das Verbrennen des hochprozentigen Alkohols auf dem Stab verschiebt oder sich gar vom Stab löst.

Dies ist insbesondere im Hinblick darauf nachteilig, da somit die Zucker-Stab-Einheit nicht mehr sicher auf dem Rand des Trinkgefäßes gelagert werden kann, und die Gefahr besteht, dass der Zuckerkörper frühzeitig in das Trinkgefäß hineinfällt oder gar in brennender Weise aus dem Trinkgefäß herausfällt.

Der Erfindung liegt daher die Aufgabe zugrunde, die Verbindung zwischen dem Stab und dem Zuckerkörper zu verbessern.

Die Erfindung löst diese Aufgabe mit den Merkmalen einer Zucker-Stab-Einheit gemäß Anspruch 1 sowie mit einer Vorrichtung zur Herstellung derartiger Zucker-Stab-Einheiten gemäß Anspruch 11.

Die erfindungsgemäße Zucker-Stab-Einheit weist zu diesem Zweck im mittleren Bereich des Stabes ein Loch auf, wobei der Stab den Zuckerkörper derart durchdringt, dass der gesamte Zuckerkörper den Stab in einem mittleren Bereich des Stabes durchdringt.

Bei der Herstellung der Zucker-Stab-Einheit wird das Loch mit Kristallzucker befüllt, der im Bereich des Loches verklebt, so dass die Oberseite und die Unterseite durch das Loch hindurch mit sich verklebendem Zucker verbunden ist. Durch diese Verklebung ergibt sich eine substantiell verbesserte Verbindung zwischen Stab und Zuckerkörper im Vergleich zu der Zucker-Stab-Einheit gemäß DE 20 2017 002 283 U1. Der Stab und der Zuckerkörper sind daher wesentlich verbessert in Bezug auf eine stabile Verbindung des Zuckerkörpers am Stab. Der Zuckerkörper kann daher auch während des Verbrennungsvorgangs des Alkohols nicht verrutschen. Dies ist vorteilhaft, da somit auch bei einer Bewegung des Trinkgefäßes die Gefahr eines Abrutschens der Zucker-Stab-Einheit vom Rand des Trinkgefäßes signifikant gemindert ist.

Ferner hilft das Loch im Stab, Material zu sparen. Der erfindungsgemäße Stab wird vorzugsweise aus einem dünnen lebensmitteltauglichen Edelstahl hergestellt. Es können alternativ aber auch andere hitzebeständige Materialien verwendet werden. All diese Materialien sind jedoch aufgrund der erforderlichen Lebensmitteltauglichkeit und Hitzebeständigkeit teuer. Das erfindungsgemäße Loch im Stab trägt dazu bei, den Materialeinsatz gering zu halten und damit die Kosten zu senken.

Gemäß einer Weiterbildung der Erfindung weist der Zuckerkörper die Form eines Kegelstumpfes auf. Eine derartige Ausbildung des Zuckerkörpers ist besonders vorteilhaft im Hinblick auf das Herauslösen des Zuckerkörpers aus einer Matrize, die während des Herstellungsvorganges zur Formgebung des Zuckerkörpers verwendet wird.

Eine Weiterbildung der Erfindung sieht vor, dass der Zuckerkörper die Form eines an der Spitze abgerundeten Kegels aufweist. Eine derartige Formgebung des Zuckerkörpers ist wiederum während des Herstellungsprozesses besonders vorteilhaft, da sich der Zuckerkörper mit einer derartigen Form besonders leicht aus der Matrize entnehmen lässt.

Gemäß einer Weiterbildung der Erfindung weist der Zuckerkörper die Form eines Kegelstumpfes mit an der kleineren Deckfläche des Kegelstumpfes anschließendem Kugelsegment auf, wobei die Grundfläche des Kugelsegments genauso groß ist wie die kleinere Deckfläche des Kegelstumpfes. Eine derartige Formgebung des Zuckerkörpers ist vorteilhaft im Hinblick auf die Bildung der Form und dem Herstellprozesses des Zuckerkörpers. Bevorzugterweise ist die Höhe des Kugelsegments kleiner als der Radius der Kugel, welche zu dem Kugelsegment gehört. Vorteilhafterweise ist die Höhe des Kugelsegments kleiner als 20 %, vorzugsweise kleiner als 10 %, des Radius der Kugel oder des Radius des Basiskreises des Kugelsegments.

Dank einer derartigen Formgebung endet der Kegelstumpf zwar in einer abgerundeten, aber vergleichsweise flachen bzw. stumpfen Weise. Eine derartige Ausbildung ist vorteilhaft, da der Stab den Zuckerkörper in diesem Bereich durchdringt. Während des Transports der Zucker-Stab-Einheit kann es zu Bewegungen, insbesondere Vibrationen, des aus dem Zuckerkörper heraustretenden Stabendes kommen. Diese Bewegungen und Vibrationen können dafür sorgen, dass der Zuckerkörper in diesem Bereich zerbröselt. Dieser Effekt wird signifikant dadurch gemindert, dass das sich in diesem Bereich befindende Ende des Zuckerkörpers stumpf bzw. flach ausgebildet ist, so dass der Zuckerkörper in diesem Bereich eine hohe Stabilität auch gegenüber Bewegungen bzw. Vibrationen des heraustretenden Stabendes beibehält.

Gemäß einer Weiterbildung der Erfindung weist das Loch einen rechteckförmigen Querschnitt auf. Es hat sich herausgestellt, dass ein derartiger Querschnitt besonders günstig herzustellen ist.

Vorzugsweise verläuft die lange Seite des rechteckförmigen, dreieckförmigen oder trapezförmigen Loches in Längsrichtung des Stabes, während die kurze Seite des Loches quer dazu verläuft. Somit erstreckt sich das Loch entlang des Stabes. Dies ist vorteilhaft, da auf diese Weise eine sich über eine technisch relevante Länge erstreckende Verbindung zwischen Zuckerkörper und Stab gebildet wird.

Eine Weiterbildung der Erfindung sieht vor, dass die Breite des Stabes im Bereich des Loches gegenüber der Stabbreite im Übrigen vergrößert ist, aber stetig, insbesondere linear, abnimmt oder zunimmt.

Eine Weiterbildung der Erfindung sieht vor, dass der Stab als flacher Stab nach Art eines Spatels ausgebildet ist und eine Dicke von 0,1 bis 0,3 mm, bspw. 0,2 mm, aufweist. Die Länge des Stabes ist dabei derart gewählt, dass er zuverlässig die Öffnung eines herkömmlichen Trinkgefäßes, bspw. eines herkömmlichen Bechers oder einer herkömmlichen Tasse, abdecken kann und zwar auch dann, wenn die Zucker-Stab-Einheit auf dem Rand des Trinkgefäßes soweit verrutscht, bis der Zuckerkörper am Rand des Trinkgefäßes anliegt. Auch in diesem Fall stellt die gewählte Länge des Stabes sicher, dass der Stab an zwei Stellen des Randes des Trinkgefäßes aufliegt und aufgrund der Dicke des Zuckerkörpers nicht über den Rand des Trinkgefäßes hinweg verrutschen kann. Die Länge des Stabes beträgt daher wenigstens 8 cm und vorzugsweise wenigstens 11 bis 12 cm.

Gemäß einer Weiterbildung der Erfindung weist der Stab an einem seiner Enden ein Griffstück in Form einer Verbreiterung des Stabes auf, wobei das Griffstück vorzugsweise mit einem Loch versehen ist. Das Griffstück erleichtert die Handhabung der Zucker-Stab-Einheit.

Das Griffstück ist vorteilhafterweise als Zierelement ausgebildet. Bspw. kann das Griffstück die Form eines Sterns, eines Tannenbaums, eines Mondes oder Halbmondes, eines Pfeils, eines Kelchs, eines Herzens, eines Schädels oder sonstiger gestalterischer Elemente oder Figuren, wie einem Weihnachtsmann oder einem Engel, aufweisen.

Ein Loch im Griffstück dient wiederum der Reduzierung des benötigten Materials.

Die Erfindung sieht ferner eine Vorrichtung zur Herstellung vorliegend angegebener Zucker-Stab-Einheiten vor, wobei die Vorrichtung eine Matrize, insbesondere eine Silikonmatrize, d.h. eine Matrize aus Silikon, aufweist, welche das Negativ der Außenform eines oder mehrerer Zuckerkörper bildet. Diese Matrize weist eine obere Öffnung zum Hineingeben von befeuchtetem Kristallzucker und eine untere Öffnung auf, die an den Querschnitt des Stabes derart angepasst ist, dass der Stab von der unteren Öffnung aufgenommen und dabei von der unteren Öffnung umschlossen wird. Vorteilhafterweise liegt dabei die Öffnung am Stab an. Dies erleichtert eine senkrechte Positionierung des Stabes während des Herstellungsprozesses. Außerdem wird somit ein Austreten von Kristallzucker durch die untere Öffnung vermieden.

Die Herstellung der Zucker-Stab-Einheiten kann mittels dieser Vorrichtung folgendermaßen vonstatten gehen:
Über die obere Öffnung der Matrize wird befeuchteter Kristallzucker eingefüllt und zwar vorzugsweise so viel, dass der Kristallzucker bis zur oder gerade bis knapp unter die obere Öffnung reicht. Sodann wird der Stab in den Kristallzucker hineingedrückt und zwar durch die untere Öffnung hindurch.

Bevorzugterweise ist die Matrize in einem Abstand zu einem Bodenblech der Vorrichtung angeordnet, auf welches sich die in den Kristallzucker hineingedrückten Stäbe abstützen können. Auf diese Weise ergibt sich eine in der Lage definierte Anordnung der Zuckerkörper zum jeweiligen Stab.

Eine Ausführung der erfindungsgemäßen Vorrichtung sieht vor, dass die Matrize von einem Rost aufgenommen ist, wobei der Rost mittels Abstandselementen beabstandet zum Bodenblech angeordnet ist. Vorteilhafterweise können dabei herkömmliche Gitterroste verwendet werden, wie sie bspw. für die Abdeckung von Kellerfenstern verwendet werden.

Weiterbildungen der Erfindung ergeben sich aus den Ansprüchen, der Beschreibung und den Zeichnungen. Die vorgenannten Vorteile von Merkmalen und von Kombinationen mehrerer Merkmale sind beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausgestaltungen der Erfindung oder von Merkmalen unterschiedlicher Ansprüche ist ebenfalls abweichend von den gewählten Rückbeziehungen der Ansprüche möglich und wird hiermit vorgeschlagen. Dies betrifft auch solche Merkmale, die in separaten Zeichnungen dargestellt sind oder bei deren Beschreibung genannt werden. Diese Merkmale können auch mit Merkmalen verschiedener Ansprüche kombiniert werden. Ebenso können in Ansprüchen aufgeführte Merkmale für weitere Ausführungen der Erfindung entfallen.

In der Zeichnung zeigen:
- Fig. 1: ein erstes Ausführungsbeispiel einer erfindungsgemäßen Zucker-Stab-Einheit,
- Fig. 2: ein zweites Ausführungsbeispiel einer erfindungsgemäßen Zucker-Stab-Einheit,
- Fig. 3: ein drittes Ausführungsbeispiel einer erfindungsgemäßen Zucker-Stab-Einheit,
- Fig. 4: ein Ausführungsbeispiel einer erfindungsgemäßen Vorrichtung zur Herstellung erfindungsgemäße Zucker-Stab-Einheiten und
- Fig. 5: eine Schnittansicht eines Ausschnitts eines Ausführungsbeispiels einer erfindungsgemäßen Matrize zur Herstellung einer Zucker-Stab-Einheit, wie sie bspw. in der Vorrichtung gemäß Fig. 4 verwendet wird.

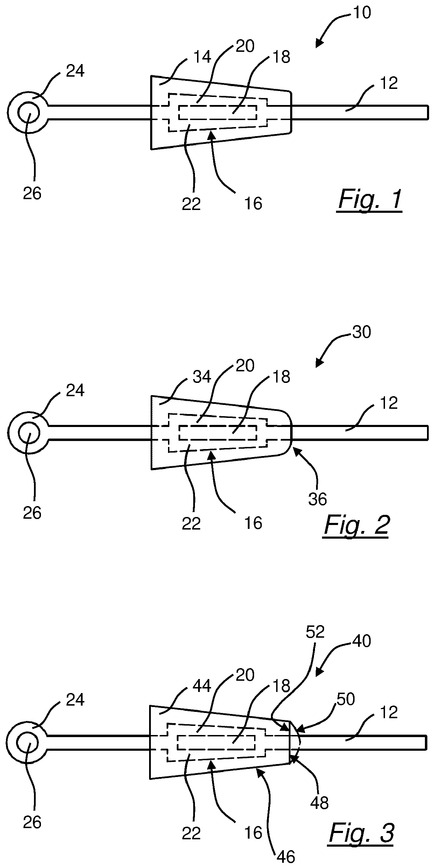

Fig. 1 zeigt ein Ausführungsbeispiel einer erfindungsgemäßen Zucker-Stab-Einheit 10, die einen Stab 12 und einen Zuckerkörper 14 umfasst. Der Stab 12 ist als flacher Stab ausgebildet, der in einem mittleren Bereich 16 ein Loch 18 aufweist.

Das Loch 18 weist einen rechteckförmigen Querschnitt auf, der sich in Längsrichtung des Stabes 12 erstreckt. Statt eines rechteckförmigen Querschnitts kann das Loch jedoch auch einen dreieckförmigen oder trapezförmigen Querschnitt aufweisen.

Im Bereich des Loches 18 umfasst der Stab somit zwei nebeneinander verlaufende Teilabschnitte 20, 22.

Die Teilabschnitte 20, 22 weisen eine sich in Längsrichtung des Stabes verändernde Breite auf. Vorzugsweise erhöht sich die Breite der Teilabschnitte 20, 22 in der Weise - entweder qualitativ oder quantitativ -, wie sich die Breite des Zuckerkörpers 14 erhöht. In dem Ausführungsbeispiel gemäß Fig. 1 erhöht sich die Breite des Zuckerkörpers 14 von rechts nach links und ebenso erhöht sich die Breite der Teilabschnitte 20, 22 von rechts nach links.

Die Veränderung der Breite der Teilabschnitte 20, 22 des Stabes 12 trägt ebenfalls zu einer Verbesserung der Verbindung zwischen Stab 12 und Zuckerkörper 14 bei. Wie bereits eingangs ausgeführt trägt zudem das Loch 18 substantiell zur Verbesserung der Verbindung zwischen Stab 12 und Zuckerkörper 14 bei. Der Zuckerkörper 14 durchdringt nämlich das Loch 18, so dass eine stabile Verbindung zwischen Stab 12 und Zuckerkörper 14 gebildet wird.

Der Stab 12 weist an einem seiner Enden ein Griffstück 24 auf.

Dieses Griffstück 24 weist im dargestellten Ausführungsbeispiel ein Loch 26 auf. Ein derartiges Loch 26 ist zwar vorteilhaft im Hinblick auf mögliche Materialeinsparungen. Bei alternativen Ausführungen kann das Loch 26 jedoch geschlossen bzw. nicht vorhanden sein. Ebenfalls kann bei anderen alternativen Ausführungen das Griffstück 24 entfallen.

Fig. 2 zeigt ein weiteres Ausführungsbeispiel einer erfindungsgemäßen Zucker-Stab-Einheit 30, wobei der Stab 12 dem in Fig. 1 gezeigten Stab entspricht, so dass auf die obigen Ausführungen zu Fig. 1 verwiesen wird.

Jedoch unterscheidet sich der Zuckerkörper 34 der Zucker-Stab-Einheit 30 gemäß Fig. 2 von dem Zuckerkörper 14 gemäß dem Ausführungsbeispiel gemäß Fig. 1.

Während der Zuckerkörper 14 gemäß Fig. 1 als Kegelstumpfes ausgebildet ist, ist der Zuckerkörper 34 als Kegel mit einer flach abgerundeten Kegelspitze 36 ausgebildet.

Fig. 3 zeigt ein weiteres Ausführungsbeispiel einer erfindungsgemäßen Zucker-Stab-Einheit 40, wobei der Stab 12 dem in Fig. 1 gezeigten Stab entspricht, so dass auf die obigen Ausführungen verwiesen wird.

Jedoch unterscheidet sich der Zuckerkörper 44 der Zucker-Stab-Einheit 40 gemäß Fig. 3 von dem Zuckerkörper 14 gemäß dem Ausführungsbeispiel gemäß Fig. 1 und auch von dem Zuckerkörper 34 gemäß dem Ausführungsbeispiel gemäß Fig. 2.

Der Zuckerkörper 44 weist die Form eines Kegelstumpfes 46 mit an der kleineren Deckfläche 48 des Kegelstumpfes 46 anschließendem Kugelsegment 50 auf, wobei die Grundfläche 52 des Kugelsegments 50 der kleineren Deckfläche 48 entspricht und an diese angrenzt.

Die Höhe des Kugelsegments 50 ist wesentlich kleiner als der Radius der das Kugelsegment 50 definierenden Kugel. Die Höhe des Kugelsegments 50 ist aber auch kleiner als der Radius des Basiskreises des Kugelsegments 50 bzw. dem Radius der Grundfläche 52 des Kugelsegments 50.

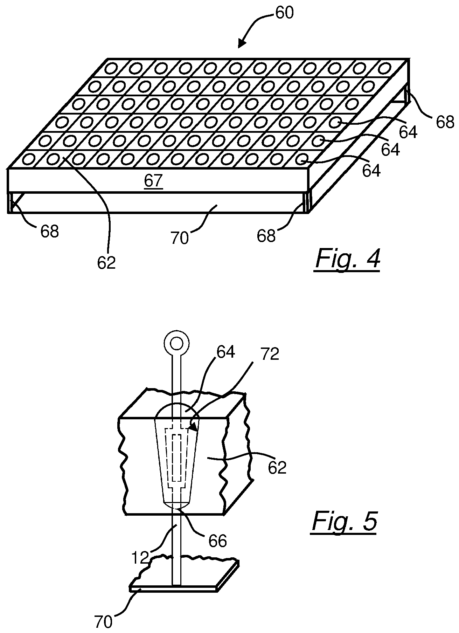

Fig. 4 zeigt ein Ausführungsbeispiel einer erfindungsgemäßen Vorrichtung 60 zur Herstellung der dargestellten Zucker-Stab-Einheiten, insbesondere gemäß den Figuren 1 bis 3.

Die Vorrichtung 60 umfasst eine Matrize 62, welche als Gussform für eine Vielzahl von Zuckerkörpern dient. Im dargestellten Beispiel weist die Matrize 62 12 x 6 = 72 obere Öffnungen 64 zum Hineingeben von befeuchtetem Kristallzucker auf. Die dargestellte Matrize 62 dient daher zum Bilden von 72 Zuckerkörpern und damit von 72 Zucker-Stab-Einheiten.

Alternative Anzahlen und Anordnungen der Öffnungen in der Matrize sind in beliebiger Art und Weise möglich. D.h. die Erfindung ist nicht auf eine Matrize mit 72 Öffnungen beschränkt, sondern lässt auch jedwede andere Anzahlen zu.

Der oberen Öffnung 64 ist jeweils eine untere Öffnung 66 (Fig. 5) gegenüberliegend angeordnet, die einen Querschnitt aufweist, der an den Querschnitt des Stabes 12 angepasst ist und zwar in dem Endbereich, der dem Griffstück 24 gegenüberliegt.

Die Vorrichtung 60 umfasst ferner einen Rost 66, welcher die Matrize 62 aufnimmt. Dieser Rost 67 wird von Abstandselementen 68 betragen, die dafür sorgen, dass der Rost 67 beabstandet zu einem Bodenblech 70 angeordnet ist. Das Bodenblech 70 dient dazu, dass sich die Enden der Stäbe 12 darauf abstützen können.

Fig. 5 zeigt eine Schnittansicht eines Ausschnitts der in Fig. 4 gezeigten Matrize 62, die das Negativ 72 der Außenform eines Zuckerkörpers, bspw. des in Fig. 3 dargestellten Zuckerkörpers 44, bildet.

Insgesamt ermöglicht die Erfindung eine einfache Herstellung von Zucker-StabElementen für die Zubereitung von in Trinkgefäßen, insbesondere Bechern und Tassen, zubereiteten Feuerzangenbowlen mit einer zuverlässigen Verbindung zwischen den Zuckerelementen einerseits und den Stäben der Zucker-StabElemente andererseits.

Vorliegend werden folgende Bezugsziffern verwendet:
- 10: Zucker-Stab-Einheit
- 12: Stab
- 14: Zuckerkörper
- 16: mittlerer Bereich des Stabes
- 18: Loch
- 20: Teilabschnitt des Stabes
- 22: Teilabschnitte Stabes
- 24: Griffstück
- 26: Loch
- 30: Zucker-Stab-Einheit
- 34: Zuckerkörper
- 36: abgerundete Kegelspitze
- 40: Zucker-Stab-Einheit
- 44: Zuckerkörper
- 46: Kegelstumpfform
- 48: kleinere Deckfläche
- 50: Kugelsegment
- 52: Grundfläche des Kugelsegments
- 60: Vorrichtung zur Herstellung von Zucker-Stab-Einheiten
- 62: Matrize
- 64: obere Öffnung
- 66: untere Öffnung
- 67: Rost
- 68: Abstandselement
- 70: Bodenblech
- 72: Negativ

## Patentansprüche

1. Zucker-Stab-Einheit, die einen Stab (12) und einen Zuckerkörper (14; 34; 44) aus verklebtem Kristallzucker aufweist, wobei der Stab (12) den Zuckerkörper (14; 34; 44) derart durchdringt, dass der gesamte Zuckerkörper (14; 34; 44) den Stab (12) im mittleren Bereich (16) des Stabes (12) umgibt,
**dadurch gekennzeichnet, dass**
der Stab (12) im mittleren Bereich ein Loch (18) aufweist.

2. Zucker-Stab-Einheit nach Anspruch 1,
**dadurch gekennzeichnet, dass**
der Zuckerkörper (14) die Form eines Kegelstumpfes aufweist.

3. Zucker-Stab-Einheit nach Anspruch 1,
**dadurch gekennzeichnet, dass**
der Zuckerkörper (34) die Form eines an der Spitze abgerundeten Kegels aufweist.

4. Zucker-Stab-Einheit nach Anspruch 1,
**dadurch gekennzeichnet, dass**
der Zuckerkörper (44) die Form eines Kegelstumpfes (46) mit an der kleineren Deckfläche (48) des Kegelstumpfes (46) anschließendem Kugelsegment (50) aufweist, wobei die Grundfläche (52) des Kugelsegments (50) genauso groß ist wie die kleinere Deckfläche (48).

5. Zucker-Stab-Einheit nach Anspruch 4,
**dadurch gekennzeichnet, dass**
die Höhe des Kugelsegments (50) kleiner ist als der Radius der Kugel.

6. Zucker-Stab-Einheit nach Anspruch 5,
**dadurch gekennzeichnet, dass**
die Höhe des Kugelsegments (50) weniger als 20 %, vorzugsweise weniger als 10 %, des Radius der Kugel oder des Radius des Basiskreises des Kugelsegments (50) beträgt.

7. Zucker-Stab-Einheit nach einem der vorhergehenden Ansprüche,
**dadurch gekennzeichnet, dass**
das Loch (18) einen rechteckförmigen, dreieckförmigen oder trapezförmigen Querschnitt aufweist.

8. Zucker-Stab-Einheit nach einem der vorhergehenden Ansprüche,
**dadurch gekennzeichnet, dass**
die Breite des Stabes (12) im Bereich des Loches (18) gegenüber der Breite des Stabes (12) im Übrigen vergrößert ist und die Breite des Stabes (12) im Bereich des Loches (18) stetig, insbesondere linear, abnimmt oder zunimmt.

9. Zucker-Stab-Einheit nach einem der vorhergehenden Ansprüche,
**dadurch gekennzeichnet, dass**
der Stab (12) flach ist und eine Dicke von 0,1 bis 0,3 mm, bspw. 0,2 mm, aufweist und/oder eine Länge von wenigstens 8 cm, vorzugsweise wenigstens 11 cm aufweist.

10. Zucker-Stab-Einheit nach einem der vorhergehenden Ansprüche,
**dadurch gekennzeichnet, dass**
der Stab (12) an einem seiner Enden ein Griffstück (24) in Form einer Verbreiterung des Stabes aufweist, vorzugsweise ein Griffstück (24) mit einem Loch (26).

11. Vorrichtung zur Herstellung von Zucker-Stab-Einheiten (10; 30; 40) nach einem der Ansprüche 1 bis 10,
mit einer Matrize (62), vorzugsweise einer Silikonmatrize, welche das Negativ (72) der Außenform eines oder mehrerer Zuckerkörper (14; 34; 44) von solchen Zucker-Stab-Einheiten (10; 30; 40) bildet,
die eine obere Öffnung (64) zum Hineingeben von befeuchtetem Kristallzucker und
eine untere Öffnung (66) aufweist, die an den Querschnitt des Stabes (12) von solchen Zucker-Stab-Einheiten (10; 30; 40) derart angepasst ist, dass der Stab (12) derart von der unteren Öffnung (66) aufgenommen werden kann, dass der Stab (12) von der unteren Öffnung (66) umschlossen wird.

12. Vorrichtung nach Anspruch 11, wobei die Vorrichtung ferner einen Rost aufweist, welcher die Matrize aufnimmt, wobei der Rost mittels Abstandselementen in einem Abstand von einem Bodenblech angeordnet ist, auf welches sich der oder die Stäbe abstützen können.

## Claims

1. Sugar rod unit comprising a rod (12) and a sugar body (14; 34; 44) made of bonded granulated sugar, wherein the rod (12) penetrates the sugar body (14; 34; 44) such that in a central region (16) of the rod (12) the whole sugar body (14; 34; 44) surrounds the rod (12),
**characterized in that**
the rod (12) has a hole (18) in the central region.

2. Sugar rod unit according to claim 1,
**characterized in that**
the sugar body (14) has the shape of a truncated cone.

3. Sugar rod unit according to claim 1,
**characterized in that**
the sugar body (34) has the shape of a cone rounded at the tip.

4. Sugar rod unit according to claim 1,
**characterized in that**
the sugar body (44) has the shape of a truncated cone (46) with a spherical segment (50) adjoining the smaller top surface (48) of the truncated cone (46), wherein the base surface (52) of the spherical segment (50) is the same size as the smaller top surface (48).

5. Sugar rod unit according to claim 4,
**characterized in that**
the height of the spherical segment (50) is smaller than the radius of the sphere.

6. Sugar rod unit according to claim 5,
**characterized in that**
the height of the spherical segment (50) is less than 20 %, preferably less than 10 %, of the radius of the sphere or the radius of the base circle of the spherical segment (50).

7. Sugar rod unit according to one of the preceding claims,
**characterized in that**
the hole (18) has a rectangular, triangular or trapezoidal cross-section.

8. Sugar rod unit according to one of the preceding claims,
**characterized in that**
the width of the rod (12) in the region of the hole (18) is increased compared to the width of the remaining rod (12) and the width of the rod (12) in the region of the hole (18) decreases or increases continuously, in particular linearly.

9. Sugar rod unit according to one of the preceding claims,
**characterized in that**
the rod (12) is flat and has a thickness of 0.1 to 0.3 mm, for example 0.2 mm, and/or has a length of at least 8 cm, preferably at least 11 cm.

10. Sugar rod unit according to one of the preceding claims,
**characterized in that**
the rod (12) has at one of its ends a handle (24) in the form of an extension of the rod, preferably a handle (24) with a hole (26).

11. Device for producing sugar rod units (10; 30; 40) according to one of the claims 1 to 10, with a matrix (62), preferably a silicone matrix, which forms the negative (72) of the outer shape of one or more sugar bodies (14; 34; 44) of such sugar rod units (10; 30; 40), which has an upper opening (64) for introducing moistened granulated sugar and
a lower opening (66) which is adapted to the cross-section of the rod (12) of such sugar rod units (10; 30; 40) in such a way that a rod (12) can be received by the lower opening (66) in such a way that the rod (12) is enclosed by the lower opening (66).

12. Device according to claim 11, wherein the device further comprises a grate which receives the matrix, wherein the grate is arranged by means of spacer elements at a distance from a base plate on which the rod or rods can be supported.

## Revendications

1. Ensemble de bâtonnet de sucre, qui comporte un bâtonnet (12) et un corps en sucre (14 ; 34 ; 44) en sucre cristallisé amalgamé, le bâtonnet (12) traversant le corps en sucre (14 ; 34 ; 44) de telle sorte que l'ensemble du corps en sucre (14 ; 34 ; 44) enrobe le bâtonnet (12) dans la zone centrale (16) du bâtonnet (12),
**caractérisé en ce que**
le bâtonnet (12) comporte un trou (18) dans la zone centrale.

2. Ensemble de bâtonnet de sucre selon la revendication 1,
**caractérisé en ce que**
le corps en sucre (14) présente la forme d'un cône tronqué.

3. Ensemble de bâtonnet de sucre selon la revendication 1,
**caractérisé en ce que**
le corps en sucre (34) présente la forme d'un cône à pointe arrondie.

4. Ensemble de bâtonnet de sucre selon la revendication 1,
**caractérisé en ce que**
le corps en sucre (44) présente la forme d'un cône tronqué (46), pourvu d'un segment de cône (50) se raccordant sur la plus petite surface de couverture (48) du cône tronqué (46), la surface de base (52) du segment de cône (50) ayant exactement la même taille que la plus petite surface de couverture (48).

5. Ensemble de bâtonnet de sucre selon la revendication 4,
**caractérisé en ce que**
la hauteur du segment de cône (50) est inférieure au rayon de la sphère.

6. Ensemble de bâtonnet de sucre selon la revendication 5,
**caractérisé en ce que**
la hauteur du segment de cône (50) s'élève à moins de 20 %, de préférence à moins de 10 % du rayon de la sphère ou du rayon du cercle de base du segment de cône (50).

7. Ensemble de bâtonnet de sucre selon l'une quelconque des revendications précédentes,
**caractérisé en ce que**
le trou (18) présente une forme rectangulaire, une forme triangulaire ou une forme trapézoïdale.

8. Ensemble de bâtonnet de sucre selon l'une quelconque des revendications précédentes,
**caractérisé en ce que**
la largeur du bâtonnet (12) dans la zone du trou (18) est agrandie par ailleurs par rapport à la largeur du bâtonnet (12) et la largeur du bâtonnet (12) dans la zone du trou (18) décroît ou s'accroît constamment, notamment de manière linéaire.

9. Ensemble de bâtonnet de sucre selon l'une quelconque des revendications précédentes,
**caractérisé en ce que**
le bâtonnet (12) est plat et présente une épaisseur de 0,1 à 0,3 mm, par exemple de 0,2 mm, et / ou présente une longueur d'au moins 8 cm, de préférence d'au moins 11 cm.

10. Ensemble de bâtonnet de sucre selon l'une quelconque des revendications précédentes,
**caractérisé en ce que**
le bâtonnet (12) présente sur l'un de ses extrémités une partie de préhension (24) sous la forme d'un élargissement du bâtonnet, de préférence une partie de préhension (24) pourvue d'un trou (26).

11. Dispositif, destiné à fabriquer des ensembles de bâtonnets de sucre (10 ; 30 ; 40) selon l'une quelconque des revendications 1 à 10,
pourvu d'une matrice (62), de préférence d'une matrice en silicone, laquelle constitue le négatif (72) de la forme extérieure d'un ou de plusieurs corps en sucre (14 ; 34 ; 44) de tels ensembles de bâtonnets de sucre (10 ; 30 ; 40),
qui présente un orifice (64) supérieur, destiné à y introduire du sucre cristallisé humidifié et
un orifice (66) inférieur, qui est adapté à la section transversale du bâtonnet (12) de tels ensembles de bâtonnet de sucre (10 ; 30 ; 40), de manière à ce que le bâtonnet (12) puisse être réceptionné par l'orifice (66) inférieur de manière à ce que le bâtonnet (12) soit entouré par l'orifice (66) inférieur.

12. Dispositif selon la revendication 11, le dispositif présentant en outre une grille, laquelle réceptionne la matrice, la grille étant placée au moyen d'éléments d'espacement avec un écart par rapport à une tôle de fond sur laquelle les bâtonnets peuvent s'appuyer.
